# EUROPÄISCHE PATENTSCHRIFT

(11) **EP 2 551 621 B1**
(45) Veröffentlichungstag und Bekanntmachung des Hinweises auf die Patenterteilung: **04.10.2017**
(21) Anmeldenummer: 11175238.2
(22) Anmeldetag: 25.07.2011
(51) Int. Cl.: F27B 17/02, F27D 19/00, F27D 21/00, A61C 13/20, F27B 5/18

(54) **DENTALOFEN**
DENTAL OVEN
FOUR DENTAIRE

(43) Veröffentlichungstag der Anmeldung: 30.01.2013
(73) Patentinhaber: Ivoclar Vivadent AG, 9494 Schaan (LI)
(72) Erfinder: Jussel, Rudolf, Dipl.-Ing. FH, 6805 Feldkirch-Gisingen (AT); Buerke, Harald, 6820 Frastanz (AT)
(74) Vertreter: Baronetzky, Klaus

(56) Entgegenhaltungen:
- DE-A1- 19 949 597
- DE-A1-102006 032 655
- US-A- 4 616 123
- US-A1- 2001 023 056

## Beschreibung

Die Erfindung betrifft einen Dentalofen für Dentalrestaurationen, gemäß dem Oberbegriff von Anspruch 1.

Dentalöfen mit Temperaturregelungen sind seit langem bekannt.

So ist es beispielsweise bereits bei der DE 1 160 777 vorgesehen, die Temperatur in dem dortigen Muffelofen konstant zu halten. Ein derartiger Muffelofen dient dazu, ein Dentalrestaurationsteil in einer Muffel zu brennen, die eine Negativform des zu erreichenden Dentalrestaurationsteils aufweist. Bei der dargestellten Lösung ist unterhalb der eigentlichen Brennkammer eine Vorwärmkammer vorgesehen, und die Heizleistung der dortigen Brennkammerheizung wird über einen stufenlosen Transformator angesteuert. Über einen sogenannten Fallbügelregler, der als Vorläufer eines PID-Reglers angesehen werden kann, wird die Heizleistung geregelt.

Die in der genannten Patentschrift beschriebenen Lösung ist eher umständlich, wenn es gilt, eine rasche Zykluszeit für Dentalrestaurationsteile und einen ergonomisch günstigen Arbeitsablauf bereitzustellen. Dies liegt zum einen daran, dass eine Vorwärmzone dort integriert ist, so dass typischerweise eine kalte Muffel erst dort erwärmt werden muss, bevor sie durch Einführen in die Presskammer den Brennzyklus unterzogen werden kann.

Insbesondere ist es aber ungünstig, dass bei dieser Lösung der Ofenkopf auf festen Säulen ruht und dazu stationär verbleibt, während das empfindliche Dentalrestaurationsteil bewegt werden muss. Diese Lösung ist zwar recht preisgünstig, genügt jedoch höheren Qualitätsansprüchen nicht, es sei denn, es wird eine extrem lange Zykluszeit anvisiert, bei der der Dentalofen vollständig auskühlt, bis der Brennzyklus abgeschlossen ist.

Bei modernen Dentalöfen ist es andererseits unabdingbar, eine kürzere Zykluszeit auch beim Gießen oder Pressen mehrgliedriger Brücken zu realisieren. Gerade Pressöfen, bei denen ein Pressstempel einen Grünling in einen Kanal in der Muffel drückt und das Dentalrestaurationsteil in der Negativform erzeutgt wird, sobald sich der Pressling oder Rohling, der auch als Grünkörper bezeichnet wird, verflüssigt, ermöglicht eine qualitativ hochwertige Erzeugung eines Dentalrestaurationsteils mit geringer Zykluszeit.

Die Temperaturregelung von Brennöfen und Pressöfen für die Dentaltechnik wird seit mehreren Jahrzehnten im Grunde unverändert eingesetzt. Als weiteres Beispiel für die Verwendung eines Thermoelements in Kombination mit einem Temperaturregeler sei die DE 26 56 316 und auch die DE 10 2006 032 655 A1 genannt. Auch die DE 101 36 584 A1 zeigt einen Dentalofen mit Muffel, wobei die Besonderheit darin besteht, dass der dortige Temperatursensor gleichsam in die Muffel eindringt und deren Temperatur feststellen soll. Hierfür ist jedoch eine besondere Muffelform erforderlich, die nicht kompatibel mit handelsüblichen Muffeln ist. Zudem muss bei der Realisierung der besonderen Ausnehmungen in der Muffel darauf geachtet werden, dass die Hohlräume für die Dentalrestaurationsteile nicht zu nahe an diese Ausnehmungen gelangen, da ansonsten bei entsprechend hohem Pressdruck des dortigen Pressstempels die Muffel an dieser Stelle aufgrund der Schwächung einen Riss bilden kann.

Eine präzise Temperaturregelung lässt sich insofern besser mit der Lösung gemäß der DE 10 2005 015 435 A1 erzielen, bei der ein im Grunde von der Muffel beabstandeter Temperatursensor beispielsweise nach der Art eines Pyrometers deren Temperatur misst. Die Temperaturmessung erfolgt dort an einer Stelle, die von der Oberfläche, die Heizelementen zugewandt ist, deutlich beabstandet ist, so dass die echte Muffeltemperatur erfasst wird.

Demgegenüber liegt dennoch der Erfindung die Aufgabe zu Grunde, einen Dentalofen für Dentalrestaurationen, gemäß dem Oberbegriff von Anspruch 1, zu schaffen, der hinsichtlich der Handhabung und der Zykluszeit weiter verbessert ist.

Diese Aufgabe wird erfindungsgemäß durch Anspruch 1 gelöst. Vorteilhafte Weiterbildungen ergeben sich aus den Unteransprüchen.

Erfindungsgemäß ist es, dass zusätzlich zu dem Temperatursensor, der auf das Dentalrestaurationsteil gerichtet ist, oder anstelle dessen, ein Temperatursensor vorgesehen ist, der außerhalb der Brennkammer angeordnet ist und die Temperatur von Gegenständen erfasst, die sich an den Dentalofen annähern. Hierzu weist der Temperatursensor einen vorgegebenen Erfassungsbereich auf, also einen Bereich, in welchem er auf eine gegenüber Raumtemperatur erhöhte Temperatur anspricht und signalisiert, dass sich ein Gegenstand dort befindet, der eine erhöhte Temperatur aufweist. Diese überraschend einfache Maßnahme lässt sich erfindungsgemäß dafür ausnutzen, dass der Dentalofen sich bei Annäherung eines heißen Gegenstandes, wie beispielsweise eines heißen Dentalrestaurationsteils oder einer in einem Vorwärmofen bereits vorgewärmten Muffel, öffnet, und das Einsetzen des Dentalrestaurationsteils oder der Muffel erlaubt.

Bevorzugt weist der Dentalofen eine Ofenhaube, die die Heizung des Dentalofens aufnimmt, und ein Ofenunterteil auf, das stationär angeordnet ist. Die Ofenhaube ist mit einer an sich bekannten Ofen-/Schwenkvorrichtung mit dem Ofenunterteil verbunden.

Bei Annäherung des heißen Gegenstandes wird nun motorisch die Ofenhaube rasch angehoben, so dass der Zahntechniker oder gegebenenfalls Zahnarzt umgehend den Gegenstand, also beispielsweise die vorgewärmte Muffel, auf den Brennboden abstellen kann.

Auch wenn diese Ausgestaltung mit dem verfahrbahren Ofenhaube bevorzugt ist, versteht es sich, dass anstelle dessen auch ohne weiteres eine Ausgestaltung möglich ist, bei der die Ofenhaube stationär verbleibt und der Brennraumboden abgesenkt wird. Auch ist die automatische Öffnung einer Tür für den Brennraum denkbar, durch die dann die Muffel eingestellt wird, wobei die letzten genannten Ausführungsformen jedoch von der Handhabung deutlich schlechter sind.

Erfindungsgemäß besonders günstig ist es, wenn der Erfassungsbereich des Temperatursensors oder -fühlers bereits deutlich beabstandet von dem Dentalofen beginnt. Bevorzugt ist der Erfassungsbereich so ausgerichtet, dass er sich schräg seitlich vor der Ofenhaube erstreckt. Bei einer flüssigen Bewegung mit Annäherung der heißen Muffel verbleibt dann genügend Zeit, bis die Ofenhaube motorisch geöffnet ist. Beispielsweise kann das Öffnen innerhalb von einer Sekunde erfolgen, und der Zahntechniker benötigt etwas mehr als eine Sekunde, um die heiße Muffel über beispielsweise 80 cm schräg vor der Ofenhaube zu dieser hin zu bewegen.

Der Erfassungsbereich kann ohne weiteres sowohl in vertikaler als auch in horizontaler Richtung betrachtet recht eng sein, denn der Zahntechniker kann dann gezielt die heiße Muffel in diesen Erfassungsbereich hineinbewegen, um den Dentalofen zu öffnen.

Es versteht sich, dass anstatt dessen auch ein Erfassungsbereich über einen Raumwinkel von 90 ° oder mehr realisierbar ist; bei benachbart aufgestellten Dentalöfen versteht es sich, dass es günstig ist, die Erstreckung des Erfassungsbereichs auf deutlich weniger beispielsweise auf 50 cm zu reduzieren, um nicht versehentlich ein gleichzeitiges Auslösen mehrerer Dentalöfen mit der heißen Muffel zu erzeugen.

In erfindungsgemäß besonders bevorzugter Ausgestaltung ist der Ofenhaube ein Reflektor für Temperaturstrahlungen angeordnet, der sich in einem schrägen Winkel zur optischen Achse des Temperatursensors erstreckt.

Der Reflektor kann ohne weiteres durch eine Art Blechstreifen ausgebildet werden, der dann auch nach Wunsch des Zahntechnikers etwas zurechtgebogen werden kann, um den Erfassungsbereich an seine persönlichen Wünsche anzupassen. Es versteht sich, dass der Reflektor so ausgewählt ist, dass er Infrarotstrahlungen, also Strahlungen in dem Wellenlängenbereich um 800 nm, besonders gut reflektiert.

Anstelle dessen ist es auch ohne weiteres möglich, den Temperatursensor an einer anderen Stelle an dem Dentalbrennofen anzubringen. Beispielsweise kann er an der Ofenhaube außen angebracht sein und einen sich seitlich wegerstreckenden Erfassungsbereich aufweisen. Alternativ kann er auch an dem Ofenunterteil angebracht sein und der Erfassungsbereich kann sich dann im Wesentlichen sentkrecht nach oben oder schräg nach außen/oben erstrecken, je betrachtet zu der vertikalen Achse des Dentalofens.

Die Ausgestaltung mit Reflektor hat grundsätzlich den Vorteil, dass der Temperatursensor im Grunde besser geschützt ist, gerade, wenn beispielsweise heiße Teile wegspritzen, da sie dann nur auf den durch einen Blechstreifen oder eine Metallplatte-gebildeten Reflektor treffen.

Zudem ermöglicht diese Lösung auch die multifunktionale Verwendung des Temperatursensors: Wenn der Temperatursensor gehäusefest, also mit dem Ofenunterteil fest verbunden, gelagert ist und ofeneinwärts gerichtet ist, kann er als Nährungssensor dienen, wenn die Ofenhaube geschlossen ist, da dann die von dem Reflektor reflektierte Wärmestrahlung auf den Temperatursensor fällt.

Wenn hingegen die Ofenhaube geöffnet wird, richtet sich der Erfassungsbereich des Temperatursensors ofeneinwärts, beispielsweise auf die dort vorhandene Muffel oder ein Dentalrestaurationsteil, so dass dann dessen Temperatur ohne weiteres erfasst werden kann.

Als Temperatursensor kann entweder ein handelsüblicher Infrarotsensor eingesetzt werden, der die Annäherung einer heißen Muffel, also einer Muffel mit Temperatur von beispielsweise mehr als 500 C°, erfasst. Alternativ kann auch eine Wärmebildkamera eingesetzt werden, oder eine beliebige andere im Infrarotbereicht empfindliche Kamera. Es ist auch möglich, ein Array aus Infrarot-empfindlichen Dioden einzusetzen, das auf Temperaturen der Muffel zwischen etwa 300 C° und etwa 850 C° anspricht.

Wenn eine Ausgestaltung gewählt wird, bei der das Temperaturerfassungselement die Temperatur im Erfassungsbereich über einen haubenfesten Reflektor erfasst, ist es wichtig, dass das Temperaturerfassungselement vor der Abwärme des Brennraums bei geöffneter Ofenhaube geschützt wird. Dies kann entweder durch die Wahl eines entsprechend geeigneten Abstands des Temperaturerfassungselements von der Ofenhaube realisiert werden, oder aber durch eine Blende, die wärmedämmend wirkt und lediglich eine recht kleine Öffnung aufweist, die sich im Winkel des Erfassungsbereichs von dem Infrarotsensor etwas beabstandet vor diesem erstreckt und die von der offenen Ofenhaube abgegebene Ofenstrahlung zum Temperatursensor hin blockiert.

Erfindungsgemäß besonders günstig ist es, dass mit der Erfindung erstmals eine berührungslose Bedienung realisiert werden kann, und zwar gezielt genau dann, wenn der Dentalofen geöffnet werden soll.

In einer modifizierten Ausgestaltung ist der Sensor als Nährungssensor ausgebildet, der das Öffnen des Ofens bei Annäherung der Muffel erlaubt. Bei dieser Ausgestaltung ist es besonders bevorzugt, wenn mindestens ein weiteres Erkennungsmerkmal, wie ein Strichcode, die Iris des Benutzers oder dergleichen, eine weitere Identifizierung und Unterscheidung von unbeabsichtigter Annäherung ermöglicht.

In vorteilhafter Ausgestaltung ist es vorgesehen, dass die Steuervorrichtung vor dem Öffnen des Dentalofens basierend auf dem Ausgangssignal des Temperatursensors überprüft, ob die Brennkammer eine ausreichende Temperatur für die Aufnahme des Gegenstandes, insbesondere der Muffel, aufweist.

In weiterer Vorteilhafter Ausgestaltung ist es vorgesehen, dass der Dentalofen als Muffelpressofen für Dentalrestaurationsteile ausgebildet ist, und die Brennkammer für die Aufnahme einer Muffel ausgelegt ist und ein in dem Erfassungsbereich zu erfassender Gegenstand eine Muffel des Muffelpressofens ist.

In weiterer vorteilhafter Ausgestaltung ist es vorgesehen, dass die Steuervorrichtung eine besondere Steuerfunktion ausführt, wenn eine Muffel oder ein Dentalrestaurationsteil insbesondere auf einem Träger in den Erfassungsbereich des Temperatursensors gerät.

In weiterer vorteilhafter Ausgestaltung ist es vorgesehen, dass die Steuerfunktion eine mit dem Start eines Brennvorgangs des Dentalofens in Zusammenhang stehende Funktion, z. B. das Einschalten des Dentalofens, insbesondere jedoch das Öffnen des Dentalofens, umfasst.

In weiterer vorteilhafter Ausgestaltung ist es vorgesehen, dass der Erfassungsbereich (40) des Temperatursensors (22) sich, vom Temperatursensor ausgehend, in einer Richtung quer zum Temperatursensor betrachtet, aufweitet und dass der Erfassungsbereich (40) sich schräg zu einer Seitenfläche des Dentalofens (10) erstreckt.

In weiterer vorteilhafter Ausgestaltung ist es vorgesehen, dass der Erfassungsbereich des Temperatursensors sich an dem Ofenoberteil entlang erstreckt, insbesondere der Erfassungsbereich des Temperatursensors sich im Wesentlichen horizontal oder schräg nach oben oder schräg nach unten erstreckt und einen Bereich seitlich des Ofenoberteils abdeckt.

In weiterer vorteilhafter Ausgestaltung ist es vorgesehen, dass der Temperatursensor an dem Ofenunterteil angebracht ist und der Erfassungsbereich des Sensors sich um die optische Achse des Sensors herum erstreckt, insbesondere nach oben.

In weiterer vorteilhafter Ausgestaltung ist es vorgesehen, dadurch gekennzeichnet, dass der Erfassungsbereich des Temperatursensors sich von dem Ofenunterteil ausgehend an dem Ofenoberteil entlang nach oben oder schräg nach oben erstreckt.

In vorteilhafter Ausgestaltung ist es weiter vorgesehen, dass der Temperatursensor mit seiner optischen Achse zum Ofen hin gewandt ist und die optische Achse des Temperatursensors auf einen Reflektor trifft, der für die Reflexion von Wärmestrahlung geeignet ausgebildet ist, die auf den Temperatursensor fällt.

In weiterer vorteilhafter Ausgestaltung ist es vorgesehen, dass die optische Achse des Temperatursensors die vertikale Achse der Brennkammer in dem Ofenoberteil schneidet oder sich in einem Winkel von höchstens 15 Grad abweichend von einer Geraden erstreckt, die die vertikale Achse mit dem Temperatursensor verbindet.

In vorteilhafter Ausgestaltung ist es vorgesehen, dass der Temperatursensor eine spektrale Empfindlichkeit aufweist, deren Schwerpunkt im Infrarot-Wellenlängenbereich liegt, und auf Gegenstände anspricht, die sich im Erfassungsbereich befinden und erhöhte Temperatur, also eine deutlich höhere Temperatur als Raumtemperatur, aufweisen, insbesondere mehr als 100°C, und besonders bevorzugt mehr als 300°C.

In vorteilhafter Ausgestaltung ist es weiter vorgesehen, dass der Temperatursensor nach der Art einer Wärmebildkamera ausgebildet ist, die eine Bildinformation der in dem Erfassungsbereich befindlichen Gegenstände, soweit sie eine erhöhte Temperatur aufweisen, erfasst.

In weiterer vorteilhafter Ausgestaltung ist es vorgesehen, dass die Steuervorrichtung den Dentalofen öffnet, wenn der Temperatursensor das Vorhandensein eines Gegenstandes mit erhöhter Temperatur in dem Erfassungsbereich erfasst.

In weiterer vorteilhafter Ausgestaltung ist es vorgesehen, dass der Temperatursensor einen Erfassungsbereich aufweist, der in zwei Teilerfassungsbereiche untergliedert ist, und dass die Steuervorrichtung die den Dentalofen öffnet, wenn der Temperatursensor erst einen Gegenstand im ersten, dem Ofen ferneren Teilerfassungsbereich, und dann den Gegenstand in einem dem Ofen näheren Erfassungsbereich erfasst, also eine Annäherung des Gegenstandes an den Ofen.

In weiterer vorteilhafter Ausgestaltung ist es vorgesehen, dass der Temperatursensor als ein- oder zweidimensionales Feld von infrarotempfindlichen Dioden ausgebildet ist und der Temperatursensor mindestens zehn Zentimeter von der Brennkammer angeordnet ist.

In weiterer vorteilhafter Ausgestaltung ist der Sensor außerhalb der Brennkammer angeordnet und weist einen Erfassungsbereich auf, der sich ebenfalls außerhalb der Brennkammer erstreckt, und der Sensor weiter als Annäherungssensor ausgebildet ist und insbesondere mindestens ein weiterer Sensor den sich annährenden Gegenstand und/oder den Benutzer des Dentalofens erfasst und erkennt.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine schematische Ansicht eines erfindungsgemäßen Dentalofens in einer Ausführungsform; und
- Fig. 2: eine Seitenansicht einer weiteren Ausführungsform eines erfindungsgemäßen Dentalofens.

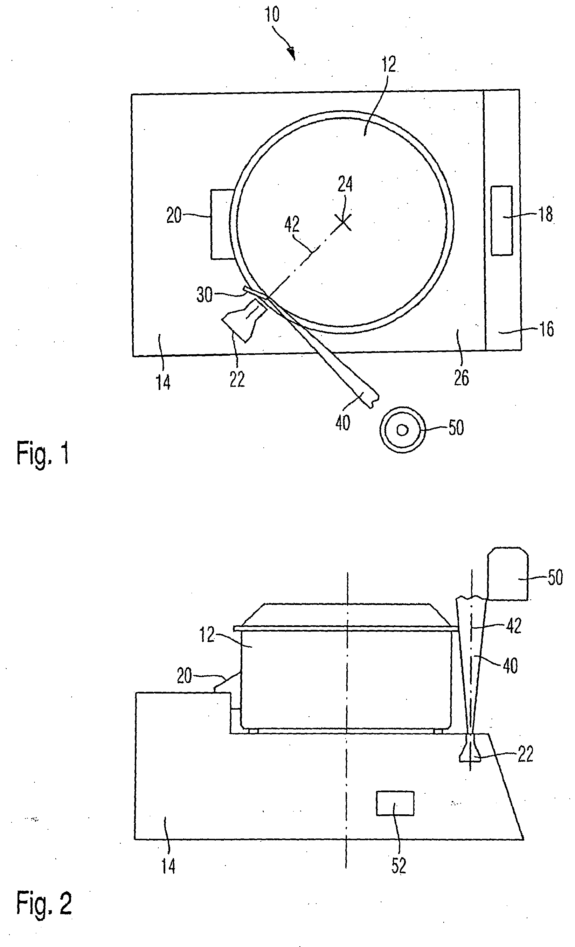

Der in Fig. 1 dargestellte Dentalofen 10 weist eine Ofenhaube 12 als Ofenoberteil, sowie ein Ofenunterteil 14 auf. Er ist als Muffelpressofen ausgebildet, und die kreisrunde Ofenhaube 12 bildet innen in an sich bekannter Weise eine Brennkammer, deren Durchmesser auch ausreicht, die ebenfalls kreisrunde und im wesentlichen zylindrische Muffel aufzunehmen.

Das Ofenunterteil weist vorne eine Schrägfläche 16 auf, die einen berührungsempfindlichen Bildschirm 18 trägt, über welchen der erfindungsgemäße Dentalofen 10 bedienbar ist.

In an sich bekannter Weise ist die Ofenhaube 12 über eine Hub-/Schwenk-Vorrichtung an dem Ofenunterteil 14 gelagert, so dass sie unter Belassung eines Spaltes von dem Ofenunterteil abhebbar und aufschwenkbar ist. In ebenfalls an sich bekannter Weise vermag der Ofen einen Brennvorgang durchführen, indem bei geschlossener Ofenhaube die Heizung in der Ofenhaube eingeschaltet wird und bei erhitzter Muffel ein Pressstempel in die Muffel eingeführt wird, der das Dentalrestaurationsmaterial in dieser in vorbereitete Formhohlräume drückt.

Erfindungsgemäß ist es vorgesehen, dass an dem Ofenunterteil gelagert ein Temperatursensor 22 auf die vertikale Achse 24 des Dentalofens ausgerichtet angebracht ist. Die Lagerung des Temperatursensors 22 erfolgt unmittelbar auf der Oberseite 26 des Ofenuntereteils 14, also am unteren Ende der Ofenhaube 12.

Ferner ist an dem Außenumfang der Ofenhaube 14 dem Temperatursensor 22 benachbart ein Reflektor 30 angebracht.

Der Reflektor 30 ist als Blechstreifen, beispielsweise als Aluminiumfolie, oder als sonstige Metallplatte ausgebildet und dafür geeignet, Wärmestrahlung zu reflektieren. Er erstreckt sich leicht schräg von der Ofenhaube weg, beispielsweise in einem Winkel von 45 °. Es versteht sich, dass die genaue Ausrichtung in weiten Bereichen an die Erfordernisse anpassbar ist.

Bei einem Schrägstellungswinkel des Reflektors von 45 ° erstreckt sich ein Erfassungsbereich 40 in einem Winkel von 90 ° zu der optischen Achse 42 des Temperatursensors 22. Es versteht sich, dass der Erfassungsbereich 40 in an sich bekannter Weise sich konisch aufweitet. Bevorzugt ist eine recht starke Bündelung vorgesehen, die eine besonders empfindliche Erfassung der Temperatur auch bei größerem Abstand ermöglicht. Die Bündelung lässt sich auch dadurch verbessern, dass der Reflektor 30 nach der Art eines Hohlspiegels ausgebildet ist.

In den dargestellten Ausführungsbeipiel ist eine Muffel 50 schematisch an einer Stelle dargestellt, in der die von ihr abgegebene Wärmestrahlung im Erfassungsbereich 40 des Temperatursensors 22 liegt.

Die Muffel ist zuvor in einem Vorwärmofen auf eine Temperatur von 700 C° erwärmt worden und hat noch eine Temperatur von etwa 500 C° an ihrer Außenseite. Die von ihr abgegebene Wärmestrahlung trifft nun im Erfassungsbereich 40 über den Reflektor 30 auf den Temperatursensor 22. Der Temperatursensor 22 ist elektrisch mit einer Steuervorrichtung 52 verbunden, die bevorzugt im Ofenunterteil 14 aufgenommen ist. Bei Annäherung der heißen Muffel 50 löst die Steuervorrichtung ein Öffnungssignal für die Hub-/SchwenkVorrichtung 20 aus, die hierdurch veranlagt die Ofenhaube 12 anhebt und das Einstellen der Muffel 20 auf das Ofenunterteil unterhalb in der optischen Achse 24 ermöglicht, und zwar in einem Zuge, also ohne dass die Bewegung der Muffel 50 zum Dentalofen 10 hin abgebremst werden müsst.

Es versteht sich, dass die Verbindung zwischen dem Temperatursensor 22 und der Steuervorrichtung 52 in beliebiger geeigneter Weise ausgebildet sein kann. Der Temperatursensor 22 ist zwar fest auf einer Unterlage aufgestellt, bevorzugt an den Dentalofen befestigt, jedoch ist er in einer beliebigen geeigneten Weise elektrisch mit der Steuervorrichtung verbunden, beispielsweise durch Funk, über Bluetooth oder auch über eine Infrarotverbindung, oder in an sich bekannter Weise durch eine elektrische Leitung.

Es versteht sich, dass die Ausrichtung des Erfassungsbereichs in beliebiger geeigneter Weise erfolgen kann. Beispielsweise können bei Bedarf auch mehrere Reflektoren 30 standardmäßig an der Ofenhaube 12 angebracht sein, sowie mehrere mögliche Befestigungspositionen für den Temperatursensor 22. Der Zahntechniker kann dann - beispielsweise auch als Linkshänder - den Temperatursensor 22 an einer beliebigen geeigneten Weise montieren und die gewünschte Öffnung bei Annäherung der Muffel 50 an den Dentalofen 10 automatisch einleiten.

Eine modifizierte Ausgestaltung eines Dentalofens ist aus Fig. 2 ersichtlich. Gleiche Bezugszeichen weisen hier auf gleiche oder entsprechende Teile hin.

Im Unterschied zu der Ausführungsform gemäß Fig. 1 ist der Erfassungsbereich 40 des Temperatursensors 22 im wesentlichen vertikal ausgerichtet. Die opitsche Achse 42 des Temperatursensors 22 erstreckt sich von dem Ofenunterteil 14 ausgehend vertikal nach oben, beispielsweise schräg seitlich vor der Ofenhaube 14.

Es versteht sich, dass auch hier bei Bedarf mehrere Befestigungsmöglichkeiten für den Temperatursensor 22 vorgesehen sein können, die es ermöglichen, nach Wahl des Zahntechnikers den Erfassungsbereich zu modifizieren. Auch hier erfolgt das Auslösen des Temperatursensors 22 dadurch, dass die Muffel 50 mindestens teilweise in den Erfassungsbereich 40 gelangt und die von der Muffel 50 abgegebene Wärmestrahlung über die Steuervorrichtung 52 im Ofenunterteil die Ofenhaube 12 anheben lässt.

## Patentansprüche

1. Dentalofen für Dentalrestaurationen, mit einem Ofenunterteil und einem Ofenoberteil, mit einer Brennkammer, in welche die Dentalrestauration einbringbar Ist, wobei ein Sensor (22) vorgesehen ist, der mit einer Steuervorrichtung für den Dentalofen verbunden Ist, **dadurch gekennzeichnet, dass** der Sensor ein Temperatursensor (22) ist, der außerhalb der Brennkammer angeordnet ist und die Temperatur von Gegenständen erfasst, die sich an den Dentalofen annähern, wobei der Temperatursensor (22) einen Erfassungsbereich (40) aufweist, in dem er auf eine gegenüber Raumtemperatur erhöhte Temperatur anspricht.

2. Dentalofen nach Anspruch 1, **dadurch gekennzeichnet, dass** der Dentalofen (10) als Muffelpressofen für Dentalrestaurationsteile ausgebildet ist, und die Brennkammer für die Aufnahme einer Muffel (50) ausgelegt ist und ein in dem Erfassungsbereich (40) zu erfassender Gegenstand eine Muffel des Muffelpressofens ist.

3. Dentalofen nach Anspruch 1 oder 2, **dadurch gekennzeichnet, dass** die Steuervorrichtung (52) geeignet ist, eine besondere Steuerfunktion auszuführen, wenn eine Muffel (50) oder ein Dentalrestaurationsteil insbesondere auf einem Träger in den Erfassungsbereich (40) des Temperatursensors (22) gerät.

4. Dentalofen nach Anspruch 3, **dadurch gekennzeichnet, dass** die Steuerfunktion eine mit dem Start eines Brennvorgangs des Dentalofens in Zusammenhang stehende Funktion, wie das Einschalten des Dentalofens und/oder das öffnen des Dentalofens (10), umfaßt.

5. Dentalofen nach einem der vorhergehenden Ansprüche, **dadurch gekennzeichnet, dass** der Erfassungsbereich (40) des Temperatursensors (22) sich, vom Temperatursensor ausgehend, in einer Richtung quer zum Temperatursensor betrachtet, aufweitet und dass der Erfassungsbereich (40) sich schräg zu einer Seitenfläche des Dentalofens (10) erstreckt.

6. Dentalöfen nach einem der vorhergehenden Ansprüche, **dadurch gekennzeichnet, dass** der Erfassungsbereich (40) des Temperatursensors (22) sich an dem Ofenoberteil (12) entlang erstreckt, Insbesondere der Erfassungsbereich (40) des Temperatursensors (22) sich im Wesentlichen horizontal oder schräg nach oben oder schräg nach unten erstreckt und einen Bereich seitlich des Ofenoberteils (12) abdeckt.

7. Dentalofen nach einem der vorhergehenden Ansprüche, **dadurch gekennzeichnet, dass** der Temperatursensor (22) an dem Ofenunterteil (14) angebracht ist und der Erfassungsbereich (40) des Sensors sich um die optische Achse (42) des Sensors herum erstreckt, insbesondere nach oben.

8. Dentalofen nach einem der vorhergehenden Ansprüche, **dadurch gekennzeichnet, dass** der Erfassungsbereich (40) des Temperatursensors (22) sich von dem Ofenunterteil (14) ausgehend an dem Ofenoberteil (12) entlang nach oben oder schräg nach oben erstreckt.

9. Dentalofen nach einem der vorhergehenden Ansprüche, **dadurch gekennzeichnet, dass** der Temperatursensor (22) mit seiner optischen Achse (42) zum Ofen hin gewandt ist und die optische Achse des Temperatursensors auf einen Reflektor (30) trifft, der für die Reflexion von Wärmestrahlung geeignet ausgebildet ist, die auf den Temperatursensor (22) fällt.

10. Dentalofen nach einem der vorhergehenden Ansprüche, **dadurch gekennzeichnet, dass** die optische Achse (42) des Temperatursensors (22) die vertikale Achse (24) der Brennkammer in dem Ofenoberteil (12) schneidet oder sich in einem Winkel von höchstens 15 Grad abweichend von einer Geraden erstreckt, die die vertikale Achse (24) mit dem Temperatursensor (22) verbindet.

11. Dentalofen nach einem der vorhergehenden Ansprüche, **dadurch gekennzeichnet, dass** der Temperatursensor (22) eine spektrale Empfindlichkeit aufweist, deren Schwerpunkt im Infrarot-Wellenlängenbereich liegt, und auf Gegenstände anspricht, die sich im Erfassungsbereich (40) befinden und erhöhte Temperatur, also eine deutlich höhere Temperatur als die Raumtemperatur, aufweisen, insbesondere mehr als 100°C, und besonders bevorzugt mehr als 300°C.

12. Dentalofen nach einem der vorhergehenden Ansprüche, **dadurch gekennzeichnet, dass** der Temperatursensor (22) nach der Art einer Wärmebildkamera ausgebildet ist, die eine Bildinformation der in dem Erfassungsbereich (40) befindlichen Gegenstände, soweit sie eine erhöhte Temperatur aufweisen, erfasst.

13. Dentalofen nach einem der vorhergehenden Ansprüche, **dadurch gekennzeichnet, dass** wenn der Temperatursensor (22) das Vorhandensein eines Gegenstandes mit erhöhter Temperatur in dem Erfassungsbereich (40) erfasst, die Steuervorrichtung ein Öffnen des Dentalofens bewirkt.

14. Dentalofen nach einem der vorhergehenden Ansprüche, **dadurch gekennzeichnet, dass** der Temperatursensor (22) einen Erfassungsbereich (40) aufweist, der in zwei Teilerfassungsbereiche untergliedert ist, und dass die Steuervorrichtung (52) die den Dentalofen (10) öffnet, wenn der Temperatursensor (22) erst einen Gegenstand im ersten, dem Ofen ferneren Tollerfassungsbereich, und dann den Gegenstand in einem dem Ofen näheren Erfassungsbereich (40) erfasst, also eine Annäherung des Gegenstandes an den Ofen.

15. Dentalofen nach einem der vorhergehenden Ansprüche, **dadurch gekennzeichnet, dass** der Temperatursensor (22) als ein- oder zweidimensionales Feld von infrarotempfindlichen Dioden ausgebildet ist und der Temperatursensor mindestens zehn Zentimeter von der Brennkammer angeordnet ist.

16. Dentalofen für Dentalrestaurationen, mit einem Ofenunterteil und einem Ofenoberteil, mit einer Brennkammer, In welche die Dentalrestauration einbringbar Ist, und mit einem Sensor, der mit einer Steuervorrichtung für Dentalofen verbunden ist, **dadurch gekennzeichnet, dass** der Sensor außerhalb der Brennkammer angeordnet ist und einen Erfassungsbereich (40) aufweist, der sich ebenfalls außerhalb der Brennkammer erstreckt, und dass der Sensor als Annäherungssensor ausgebildet ist und die Annährung eines Gegenstandes im Erfassungsbereich erfasst.

17. Dentalofen nach Anspruch 16, **dadurch gekennzeichnet, dass** mindestens ein weiterer Sensor den sich annähernden Gegenstand und/oder den Benutzer des Dentalofens (10) erfasst und erkennt.

## Claims

1. A dental furnace for dental restorations comprising a furnace bottom part and a furnace upper part, said dental furnace further comprising a firing chamber into which the dental restoration can be introduced, wherein a sensor (22) is provided that is connected with a control device for the dental furnace, **characterized in that** the sensor is a temperature sensor (22), which is arranged outside the firing chamber and detects the temperature of objects which approach the dental furnace, wherein the temperature sensor (22) comprises a detection range (40) within which it responds to an increased temperature relative to room temperature.

2. The dental furnace according to claim 1, **characterized in that** the dental furnace (10) is formed as a muffle press furnace for dental restoration parts, and that the firing chamber is adapted for the accommodation of a muffle (50), and that an object that is to be detected in the detection range (40) is a muffle of the muffle press furnace.

3. The dental furnace according to claim 1 or 2, **characterized in that** the control device (52) is suitable for carrying out a special control function when a muffle (50) or a dental restoration part in particular on a carrier reaches the detection range (40) of the temperature sensor (22).

4. The dental furnace according to claim 3, **characterized in that** the control function comprises a function that is associated with the start of a firing process of the dental furnace, e.g. the switching on of the dental furnace and/or the opening of the dental furnace (10).

5. The dental furnace according to one of the preceding claims, **characterized in that** the detection range (40) of the temperature sensor (22) enlarges in a direction transverse to the temperature sensor, as viewed from the temperature sensor, and that the detection range (40) extends obliquely to a lateral surface of the dental furnace (10).

6. The dental furnace according to one of the preceding claims, **characterized in that** the detection range (40) of the temperature sensor (22) extends along the furnace upper part (12), that in particular the detection range (40) of the temperature sensor (22) substantially extends horizontally or obliquely upwards or obliquely downwards and covers an area to the side of the furnace upper part (12).

7. The dental furnace according to one of the preceding claims, **characterized in that** the temperature sensor (22) is attached to the furnace bottom part (14) and that the detection range (40) of the sensor extends about the optical axis (42) of the sensor, in particular upwards.

8. The dental furnace according to one of the preceding claims, **characterized in that** the detection range (40) of the temperature sensor (22) - starting from the furnace bottom part (14) - extends upwards or obliquely upwards along the furnace upper part (12).

9. The dental furnace according to one of the preceding claims, **characterized in that** the temperature sensor (22) with its optical axis (42) faces towards the furnace and that the optical axis of the temperature sensor hits a reflector (30) that is formed in a suitable manner for reflecting the heat radiation that impinges on the temperature sensor (22).

10. The dental furnace according to one of the preceding claims, **characterized in that** the optical axis (42) of the temperature sensor (22) intersects the vertical axis (24) of the firing chamber in the furnace upper part (12) or extends at an angle that deviates at most 15 degrees from a straight line that connects the vertical axis (24) with the temperature sensor (22).

11. The dental furnace according to one of the preceding claims, **characterized in that** the temperature sensor (22) comprises a spectral sensitivity whose focus lies in the infrared wavelength range, and responds to objects that are located within the detection range (40) and have an elevated temperature, i.e. a notedly higher temperature than room temperature, in particular more than 100°C and particularly preferably more than 300°C.

12. The dental furnace according to one of the preceding claims, **characterized in that** the temperature sensor (22) is formed according to the type of a thermal imaging camera that detects image information of the objects located within the detection range (40) as far as they exhibit an elevated temperature.

13. The dental furnace according to one of the preceding claims, **characterized in that** the control device opens the dental furnace when the temperature sensor (22) detects the presence of an object having an elevated temperature in the detection range (40).

14. The dental furnace according to one of the preceding claims, **characterized in that** the temperature sensor (22) comprises a detection range (40) which is subdivided into two sub-detection ranges, and that the control device (52) opens the dental furnace (10) when the temperature sensor (22) first detects an object in the first sub-detection range that is more distant from the furnace, and subsequently detects the object in a detection range (40) that is closer to the furnace, i.e. the temperature sensor detects an approach of the object to the furnace.

15. The dental furnace according to one of the preceding claims, **characterized in that** the temperature sensor (22) is embodied as a one- or two-dimensional field of infrared-sensitive diodes and that the temperature sensor is arranged at least ten centimeters away from the firing chamber.

16. A dental furnace for dental restorations comprising a furnace bottom part and a furnace upper part, a firing chamber into which the dental restoration can be introduced, and a sensor that is connected to a control device for the dental furnace, **characterized in that** the sensor is arranged outside the firing chamber and comprises a detection range (40) that also extends outside the firing chamber, and that the sensor is formed as a proximity sensor and detects approximation of an object in the detection range.

17. The dental furnace according to claim 16, **characterized in that** at at least one further sensor detects and recognizes the approaching object and/or the user of the dental furnace (10).

## Revendications

1. Four dentaire pour des restaurations dentaires, avec une base du four et une tête du four avec une chambre de cuisson dans laquelle la restauration dentaire peut être introduite, où une sonde (22) est prévue, qui est reliée à un dispositif de commande pour le four dentaire, **caractérisé en ce que** la sonde est une sonde de température (22), qui est disposé à l'extérieur de la chambre de cuisson et détecte la température des objets qui se rapprochent du four dentaire, où la sonde de température (22) présente une zone de détection (40), à l'intérieur de laquelle elle répond à une température élevée par rapport à la température ambiante.

2. Four dentaire selon la revendication 1, **caractérisé en ce que** le four dentaire (10) est configuré comme four de pressée à moufle pour des pièces de restauration dentaire et la chambre de cuisson est conçue pour accueillir un moufle (50) et un objet à détecter dans la zone de détection (40) est un moufle du four de pressée à moufle.

3. Four-dentaire selon revendication 1 ou 2, **caractérisé en ce que** le dispositif de commande (52) est adapté pour remplir une fonction de commande spécifique, lorsqu'un moufle (50) ou une pièce de restauration dentaire, en particulier sur un support, rentre dans la zone de détection (40) de la sonde de température (22).

4. Four dentaire selon la revendication 3, **caractérisé en ce que** la fonction de commande comprend une fonction associée au démarrage d'un processus de cuisson, telle que la mise en marche du four dentaire et/ou l'ouverture du four dentaire (10).

5. Four dentaire selon l'une des revendications précédentes, **caractérisé en ce que** la zone de détection (40) de la sonde de température (22), s'élargit à partir de la sonde de température dans une direction perpendiculaire à la sonde de température, et que la zone de détection (40) s'étend de façon inclinée par rapport à la surface latérale du four dentaire (10).

6. Four dentaire selon l'une des revendications précédentes, **caractérisé en ce que** la zone de détection (40) de la sonde de température (22) s'étend le long de la tête du four (12), en particulier la zone de détection (40) de la sonde de température (22) s'étend essentiellement horizontalement ou de façon inclinée vers le haut ou vers le bas et couvre une zone latérale par rapport à la tête du four (12).

7. Four dentaire selon l'une des revendications précédentes, **caractérisé en ce que** la sonde de température (22) est monte sur la base du four (14) et la zone de détection de la sonde s'étend autour de l'axe optique (42) de la sonde (40) en particulier vers le haut.

8. Four dentaire selon l'une des revendications précédentes, **caractérisé en ce que** la zone de détection (40) de la sonde de température (22) s'étend à partir de la base du four (14) le long de la tête du four (12) vers le haut ou de façon inclinée vers le haut.

9. Four dentaire selon l'une des revendications précédentes, **caractérisé en ce que** la sonde de température (22) est tournée vers le four avec son axe optique (42) et l'axe optique de la sonde de température rencontre un réflecteur (30), qui est conçue pour la réflexion du rayonnement thermique qui tombe sur la sonde de température (22).

10. Four dentaire selon l'une des revendications précédentes, **caractérisé en ce que** l'axe optique (42) de la sonde de température (22) coupe l'axe vertical (24) de la chambre de combustion dans la tête du four (12) ou s'étend à un angle supérieur à 15 degrés par rapport à une ligne droite qui relie l'axe vertical (24) à la sonde de température (22).

11. Four dentaire selon l'une des revendications précédentes, **caractérisé en ce que** la sonde de température (22) présente une sensibilité spectrale, dont le point focal se trouve dans la gamme de longueur d'onde infrarouge et réagit aux objets situés dans la zone de détection (40) et à une température élevée, c'est à dire à une température nettement supérieure à la température ambiante, en particulier au-dessus de 100° C, et de façon particulièrement préférée au-dessus de 300° C.

12. Four dentaire selon l'une des revendications précédentes, **caractérisé en ce que** la sonde de température (22) est conçue à la manière d'une caméra thermique, qui détecte une information d'image des objets se trouvant dans la zone de détection (40) tant qu'ils ont une température élevée.

13. Four dentaire selon l'une des revendications précédentes, **caractérisé en ce que** lorsque la sonde de température (22) détecte la présence d'un objet avec une température élevée dans la zone de détection (40), le dispositif de commande déclenche l'ouverture du four dentaire.

14. Four dentaire selon l'une des revendications précédentes, **caractérisé en ce que** la sonde de température (22) dispose d'une zone de détection (40) qui est divisée en deux zones partielles de détection et que le dispositif de commande (52) ouvre le four dentaire (10), si la sonde de température (22) détecte un objet d'abord dans la première zone partielle de détection plus éloignée du four et détecte ledit objet ensuite dans une zone partielle de détection four plus près du four (40), c'est à dire un rapprochement de l'objet vers le four.

15. Four dentaire selon l'une des revendications précédentes, **caractérisé en ce que** la sonde de température (22) est conçue comme matrice unidimensionnelle ou bidimensionnelle de diodes sensible à l'infrarouge et la sonde de température est disposée à une distance d'au moins dix centimètres de la chambre de combustion.

16. Four dentaire pour des restaurations dentaires, avec une base du four et une tête du four avec une chambre de cuisson dans laquelle la restauration dentaire peut être introduite et avec une sonde qui est reliée à un dispositif de commande pour four dentaire, **caractérisé en ce que** la sonde est disposée à l'extérieur de la chambre de combustion et présente une portée de détection (40), qui s'étend aussi à l'extérieur de la chambre de combustion et que la sonde est conçue comme une sonde de proximité et détecte le rapprochement d'un objet détecté dans la zone de détection.

17. Four dentaire selon la revendication 16, **caractérisé en ce qu'**au moins une sonde supplémentaire détecte et reconnaît l'objet se rapprochant et/ou les utilisateurs du four dentaire (10).
